# EUROPÄISCHE PATENTSCHRIFT

(11) **EP 0 840 707 B1**
(45) Veröffentlichungstag und Bekanntmachung des Hinweises auf die Patenterteilung: **15.09.1999**
(21) Anmeldenummer: 96925747.6
(22) Anmeldetag: 12.07.1996
(51) Int. Cl.: C01B 3/00

(54) **VERFAHREN ZUR REVERSIBLEN SPEICHERUNG VON WASSERSTOFF**
METHOD FOR THE REVERSIBLE STORAGE OF HYDROGEN
PROCEDE DE STOCKAGE REVERSIBLE D'HYDROGENE

(30) Priorität: 19.07.1995 DE 19526434
(43) Veröffentlichungstag der Anmeldung: 13.05.1998
(73) Patentinhaber: Studiengesellschaft Kohle mbH, 45470 Mülheim (DE)
(72) Erfinder: BOGDANOVIC, Borislav, D-45470 Mülheim (DE); SCHWICKARDI, Manfred, D-45470 Mülheim (DE)
(74) Vertreter: von Kreisler, Alek, Dipl.-Chem.
(86) Internationale Anmeldenummer: EP9603076
(87) Internationale Veröffentlichungsnummer: WO9703919

(56) Entgegenhaltungen:
- DE-A- 1 909 732
- US-A- 3 313 598
- US-A- 3 931 395

## Beschreibung

Die vorliegende Erfindung betrifft ein Verfahren zur reversiblen Speicherung von Wasserstoff in Form von komplexen Alkalimetall-Aluminiumhydriden (Alkalimetallalanaten).

Zur Speicherung von Wasserstoff werden heute in der Technik vorwiegend die Methoden der Speicherung als komprimiertes Gas in Druckbehältern, bei Normaldruck in Gasometern sowie bei tiefen Temperaturen (≤ 20 K) als flüssiger Wasserstoff angewandt.

Eine neuere, in Entwicklung befindliche Methode zur Wasserstoffspeicherung (H₂-Speicherung), insbesondere für den Einsatz des Wasserstoffs als Energieträger (Brennstoff), beruht auf der reversiblen thermischen Dissoziation von Metallhydriden (MHₙ, Gl. 1; H. Buchner, *"Energiespeicherung in Metallhydriden"*, Springer-Verlag **1982**; G. Sandrock et al. in *"Hydrogen in Intermetallic Compounds II"*, S. 197, (Ed. L. Schlapbach) Springer-Verlag **1992**). Außer zur H₂-Speicherung für stationäre oder mobile Zwecke, lassen sich reversible Metallhydrid-Metallsysteme (Gl. 1) für eine Reihe weiterer potentieller oder bereits realisierter Anwendungen, wie Wasserstoff-Abtrennung, -Reinigung und -Komprimierung, Wärmespeicherung, Wärmeumwandlung und Kälteerzeugung (Wärmepumpen) und als Elektroden für elektrische Batterien technisch nutzen. 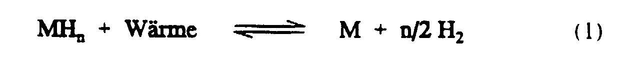
M = Metall, Metallegierung. intermetallische Verbindung

Die reversible H₂-Speicherung in Form von Metallhydriden hat gegenüber konventionellen Speichermethoden mehrere Vorteile, Metallhydride weisen gegenüber komprimiertem H₂-Gas erhebliche Vorteile auf in bezug auf die erreichbare volumetrische Speicherdichte. Außerdem besitzen Metallhydride den Sicherheitsvorteil, daß ihr Wasserstoffdissoziationsdruck im Vergleich zur gleichen Konzentration von Wasserstoff unter Druck um Zehnerpotenzen geringer ist. Die mit Hydridbehältern erreichbaren volumetrischen H₂-Dichten kommen an diejenigen von Flüssigwasserstoff-Behältern heran, ohne daß die kostspielige, aufwendige Kryotechnologie in Anspruch genommen werden muß. Die Nachteile der letzteren erkennt man u.a. an der Tatsache, daß zur Gewinnung einer Energieeinheit Flüssigwasserstoff ein 2.5- bis 5-facher Primärenergieaufwand erforderlich ist.

Der Hauptnachteil der derzeitigen reversiblen Metallhydride als H₂-Speicher gegenüber Flüssigwasserstoff, ist ihre relativ geringe Speicherdichte bezogen auf das *Gewicht* des Speichermaterials (ausgedrückt in Gew.-% H₂ im Metallhydrid). Magnesiumhydrid (MgH₂, 7.6 Gew.-% H₂) und Hydride der Magnesiumlegierungen (Mg₂NiH₄, 3.7 Gew.-% H₂) sind in dieser Hinsicht mit Flüssigwasserstoff technisch konkurrenzfähig, vorausgesetzt, daß genug Wärme oberhalb 300 °C zur Desorption des Wasserstoffs aus dem Hydrid zur Verfügung steht.

Der gravierendste Nachteil der heute bekannten sog. Tief- und Mitteltemperaturhydride (H. Buchner, **1982**, S. 26-29) sind die hohen Kosten der zur H₂-Speicherung verwendeten intermetallischen Verbindungen und Legierungen verbunden mit einer im Vergleich zu MgH₂ um einen Faktor von 4 - 5 geringeren H₂-Speicherkapazität (LaNi₅ 1.4, TiFe 1.9 Gew.-% H₂). Aus dieser Sicht erscheint es in höchstem Maße wünschenswert und technisch notwendig, neue reversible *Tief*- und/oder *Mitteltemperatur*-Metallhydride mit höher als bisher bekannten H₂-Speicherkapazitäten zu entwickeln (Sandrock **1992**, S. 220: S. Suda, G. Sandrock, *Ztschr. Physikal. Chem.. Neue Folge* **1994**, *183*, 149).

Es wurde nun überraschenderweise gefunden, daß sich die komplexen Natrium- und Kaliumalanate sowie die gemischten Natrium-Lithium-, Nathum-Kalium und Kalium-Lithiumalanate der allgemeinen Formel **1** unter bestimmten Bedingungen als reversible H₂-Speicher eignen. Darüberhinaus wurde gefunden, daß die Eigenschaften der Verbindungen **1** als reversible H₂-Speicher durch Dotierung mit erfindungsgemäßen Fremdmetallen, Intermetallen und deren Hydriden in noch erheblichem Maße verbessert werden können.

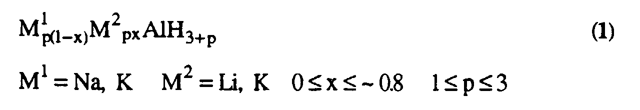

Natriumalanat, NaAlH₄, wird im technischen Maßstab produziert. Na₃AlH₆ kann aus NaAlH₄ und NaH in Gegenwart von Wasserstoff (Gl. 2) dargestellt werden (L. Zakharkin, V. Gavrilenko, *Dokl. Akad. Nauk SSSR* **1962**, *145*, 793, engl. Vol. *145*, 656).

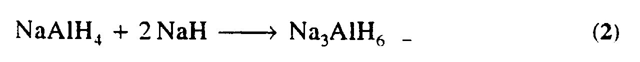

Das bisher unbekannte gemischte Alanat Na₂LiAlH₆ wurde nach Gl. 3 unter Wasserstoffdruck synthetisiert.

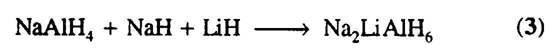

Aus der Literatur (E. Ashby, P. Kobetz. *Inorg. Chem.* **1966**, *5*, 1615; T. Dymova et al. *Dokl. Akad. Nauk SSSR* **1975**, *224*, 591, engl. 556) ist bekannt, daß die thermische Dissoziation von festem NaAlH₄ in zwei Stufen erfolgt: in der ersten Stufe zerfällt NaAlH₄ unter Wasserstoffabgabe zu Na₃AlH₆ und metallischem Aluminium (Gl. 4); bei höheren Temperaturen kommt es dann aus Na₃AlH₆, unter erneuter Wasserstoffentwicklung, zur Bildung von NaH und Al (Gl. 5). Den Gesamtverlauf der Thermolyse von NaAlH₄ gibt die Gl. 6 wieder. (Die Dissoziation von NaH zu Na und Wasserstoff findet erst bei erheblich höheren Temperaturen statt.)

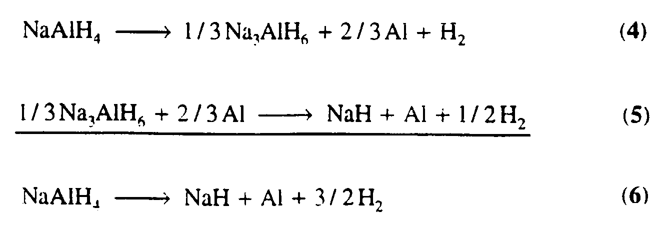

Die Thermolyse von Na₃AlH₆ erfolgt dagegen einstufig nach Gl. 7.

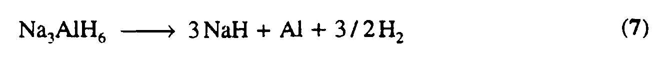

Obwohl die thermische Dissoziation von NaAlH₄ und Na₃AlH₆ zu NaH, Al und Wasserstoff (Gl. 6 und 7) beschrieben und die dazugehörenden H₂-Dissoziationsdrucke experimentell ermittelt wurden (Dymova et al. **1975**), war die Reversibilität dieser Reaktion bisher offenbar nicht erkannt. So wird die Zersetzung von NaAlH₄ zu Na₃AlH₆ und der letzteren zu NaH und Al als "irreversibel" bezeichnet (Dymova et al. **1975**, dort S. 557: "...the *irreversible* decomposition of NaAlH₄ leads to Na₃AlH₆ which, in its turn, decomposes to NaH."). Die Irreversibilität der Reaktionen Gl. 6 und 7 geht aus der zitierten Arbeit auch aufgrund der Tatsache hervor, daß die H₂-Dissoziationsdrucke nur in Richtung der H₂-*Desorption* gemessen wurde (vgl. hierzu Text auf S. 5). In einer früheren Arbeit aus demselben Arbeitskreis (T. Dymova et al., *Dokl. Akad. Nausk SSSR* **1974**, *215*, 1369 engl. 256, "Direct Synthesis of Alkali Metal Aluminium Hydrides in the Melt") wird u.a. über eine Direktsynthese von Natriumalanat (NaAlH₄) aus Na, Al und Wasserstoff *in der Schmelze* (Gl. 8) bei Temperaturen unterhalb von 270-280 °C und Drucken oberhalb von 175 bar berichtet. Aus diesen Zitaten geht hervor, daß das Reaktionsgemisch unter den Synthesebedingungen in 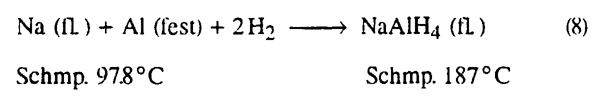 flüssiger Form vorliegt, was einen innigen Kontakt zwischen den Reaktionspartnern ermöglichen sollte. Da das Natriumhydrid (NaH) sich bei ca. 420 °C zersetzt *ohne vorher zu schmelzen*, ist aufgrund der zitierten Literatur eine Synthese von NaAlH₄ aus *NaH* (Feststoff), Al (Feststoff) und H₂ nicht zu erwarten..

Es war daher aufgrund des Standes der Technik nicht vorhersehbar und nicht zu erwarten, daß NaAlH₄ oder Na₃AlH₆ als reversible H₂-Speicher verwendet werden können. Wie jedoch überraschenderweise festgestellt wurde, können die nach der Thermolyse von NaAlH₄ oder Na₃AlH₆ *in aktiver Form anfallenden* NaH-Al-Gemische (Gl. 6 und 7) unter geeigneten Bedingungen zu NaAlH₄ bzw Na₃AlH₆ rehydriert werden (Beispiele 1 und 4). Da der Prozeß der Thermolyse von Natriumalanaten, unter Abgabe von Wasserstoff und ihrer erneuten Synthese, unter Aufnahme von Wasserstoff, wiederholbar ist, eröffnet dies die Möglichkeit, die Natriumalanat/NaH + Al-Systeme als reversible H₂-Speicher-Systeme zu verwenden. Es handelt sich hier um die ersten bekannten Wasserstoffspeichersysteme auf Basis der reversiblen Reaktionen *der Feststoff-Gemische aus einem Metallhydrid* (NaH) *und einem Metall* (Al) *mit Wasserstoff* (Gl. 9 und 10). In verschiedenem Ausmaß gilt dies auch für andere gemäß Formel 1 definierten Alkalimetallalanate.

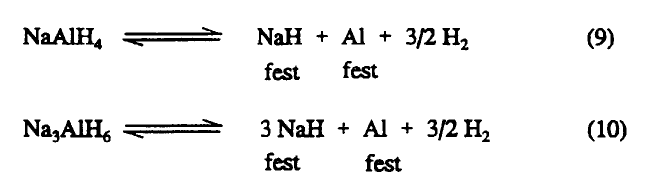

Ein weiteres Erfindungsmerkmal des vorliegenden Verfahrens ist, daß der Prozeß der Wasserstoffabgabe und -wiederaufnahme von Alkalimetallalanaten durch Zugabe von Katalysatoren beschleunigt bzw. vollständiger gemacht werden kann. Zur Katalyse der Wasserstoff-Ent- und Beladungsreaktionen (H₂-Desorption bzw. -Absorption) werden die reversiblen Alkalimetallalanate 1 erfindungsgemäß mit Fremdmetall-Verbindungen dotiert. Zur Dotierung werden Alkalimetallalanate in einem organischen Lösungsmittel oder lösungsmittelfrei mit Fremdmetall-Verbindungen umgesetzt bzw. mechanisch verrührt. Als Dotierungsmittel eignen sich Verbindungen der Übergangsmetalle der dritten bis fünften Gruppe des Periodensystems (Sc, Y, Ti, Zr, Hf, V, Nb, Ta), sowie Verbindungen des Eisens, des Nickels und der Seltenerdmetalle (La, Ce, Pr, Nd, Sm, Eu, Gd, Tb, Dy, Ho, Er, Tm, Yb, Lu). Als bevorzugte Dotierungsmittel gelten Alkoholate, Halogenide, Hydride sowie metallorganische und intermetallische Verbindungen der genannten Metalle. Auch ihre Kombinationen können eingesetzt werden. Die Dotierungsmittel werden in Mengen von 0.2 bis 10 mol-% bezogen auf Alkalimetallalanate 1, bevorzugt in Mengen von 1 bis 5 mol-% bezogen auf 1, eingesetzt. Liegen die Übergangsmetalle in einer höheren Oxidationsstufe vor, so werden sie im Zuge des Dotierungsprozesses durch die im Überschuß vorhandenen Alkalimetallalanate zu einer niedervalenten Oxidationsstufe reduziert. Der Reduktionsvorgang läßt sich anhand der Wasserstoffentwicklung bei der Dotierung erkennen und quantifizieren.

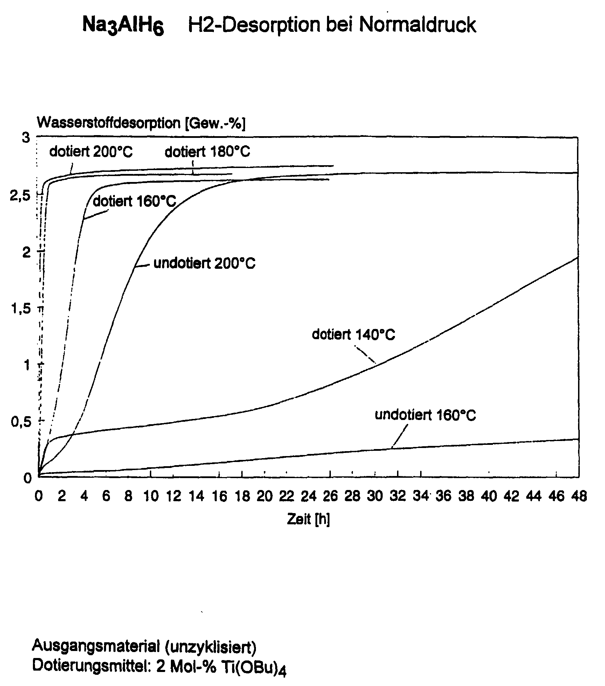

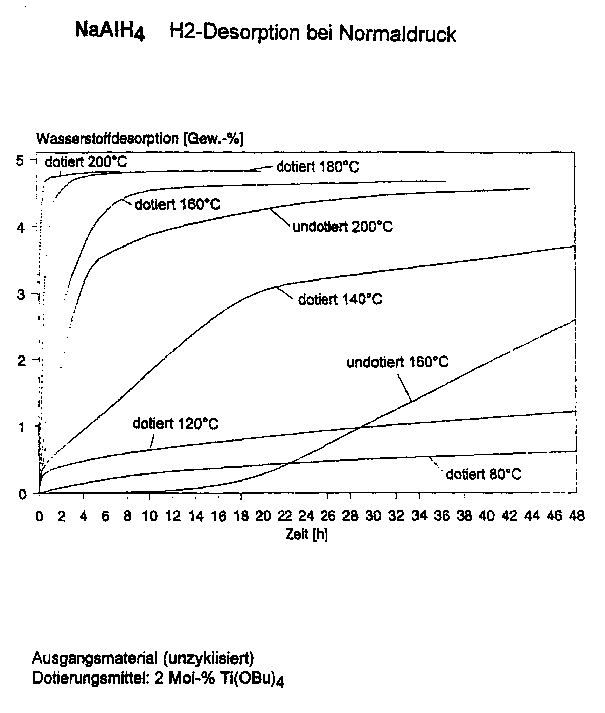

Ein wichtiges Merkmal von Metallhydriden als reversible H₂-Speicher, z. B. für mobile Zwecke, ist die Geschwindigkeit der Wasserstoff-Desorption bei verschiedenen Betriebstemperaturen. Durch die katalytische Beschleunigung der H₂-*Desorption* kann die Temperatur bei der die Desorption mit einer für eine technische Anwendung ausreichenden Geschwindigkeit abläuft erheblich gesenkt werden. So z. B. zeigt die Abb. 1 (Beispiel 2), daß das undotierte Na₃AlH₆ bei 160 °C, Wasserstoff mit einer kaum merklichen Geschwindigkeit liefert Selbst bei 200 °C ist die Dehydrierung noch relativ langsam. Demgegenüber verläuft die Desorption bei dem mit 2 mol-% Ti dotierten Na₃AlH₆ bei 160 °C mit nahezu konstanter Geschwindigkeit und ist bereits nach 4 - 5 h praktisch abgeschlossen. Ähnliches gilt auch für die H₂-Desorption des undotierten im Vergleich zu der des Ti-dotierten NaAlH₄ (Abb. 2, Beispiel 5).

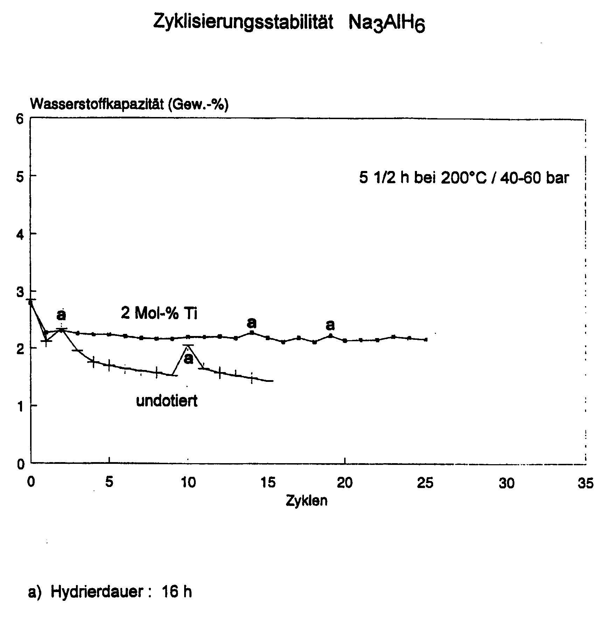

Die Verbesserung der H₂*Absorptions*fähigkeit der reversiblen Alkalimetallalanat-H₂-Speichersysteme durch die Fremdmetalldotierung läßt sich sowohl anhand der Geschwindigkeit als auch anhand des Ausmaßes der H₂-Absorption bei einer Serie von Dehydrier- Rehydrierzyklen (Zyklentests) demonstrieren. Die Verbesserung der H₂-Aufnahme des mit 2 mol-% Ti dotierten Na₃AlH₆/3 NaH + Al-Systems im Vergleich zu den, entsprechenden undotierten System unter den angegebenen Hydrierbedingungen zeigt die Abb. 3 (Beispiel 1). Der reversible H₂-Gehalt des Ti-dotierten Systems liegt deutlich höher als der des undotierten Systems; außerdem zeigt das Ti-dotierte Na₃AlH₆ im Vergleich zum undotierten Material eine höhere Zyklusstabilität.

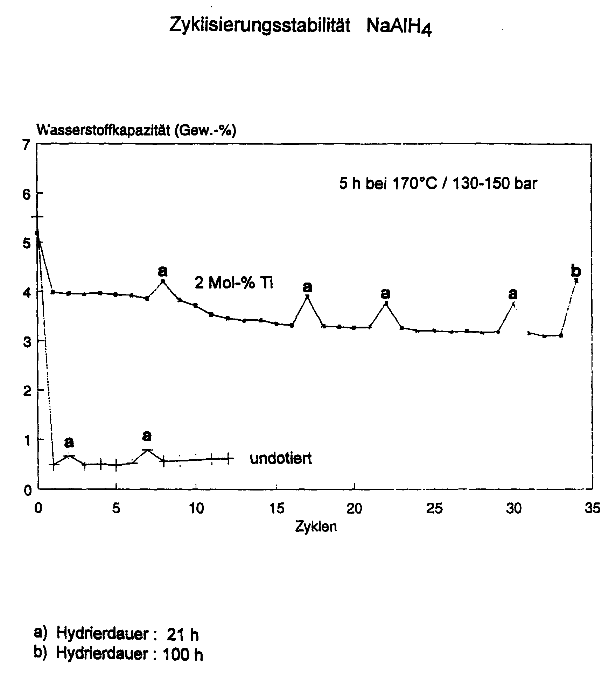

Eine dramatische Steigerung der H,-Absorptionsfähigkeit erfährt das reversible NaAlH₄/NaH + Al-System durch Ti-Dotierung, z. B. mit 2 mol-% TiCl₃. In einem typischen Zyklentest (Abb. 4, Beispiel 4) beträgt bei der dotierten Probe der reversible H₂-Gehalt 3.1-4.2 Gew.-%, während die undotierte Probe unter den gleichen Hydrierbedingungen lediglich 0.5-0.8 Gew.-% Wasserstoff speichert.

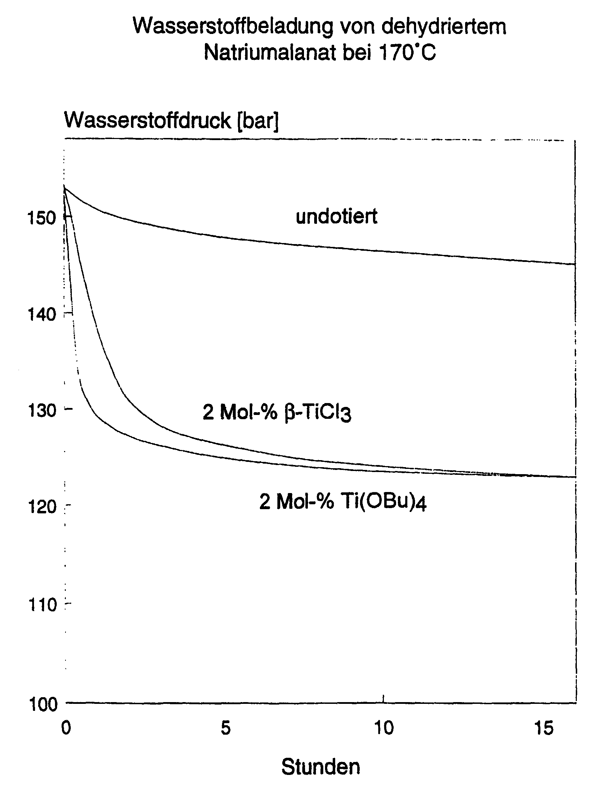

Die Verbesserung der Geschwindigkeit und des Ausmaßes der H₂-Absorption des reversiblen NaAlH₄/NaH + Al-Systems durch Ti-Dotierung lassen sich besonders deutlich anhand der Hydrierkurven in Abb. 5 (Beispiel 5) demonstrieren; wie die Abbildung zeigt, läßt sich das nach Dehydrierung des mit Ti(OBu)₄ dotierten NaAlH₄ resultierende NaH + Al-Gemisch bei 170 °C/152-125 bar wesentlich schneller als das mit TiCl₃ dotierte Material zu NaAlH₄ hydrieren. Der Rehydriergrad nach 15 h unter diesen Bedingungen beträgt bei Ti(OBu)₄- und bei TiCl₃-Dotierung 3.9 Gew.-% H₂. Unter den gleichen Hydrierbedingungen wird bei dem undotierten NaAlH₄ (Beispiel 4) ein Rehydriergrad von nur 0.8 Gew.-% H₂ erreicht.

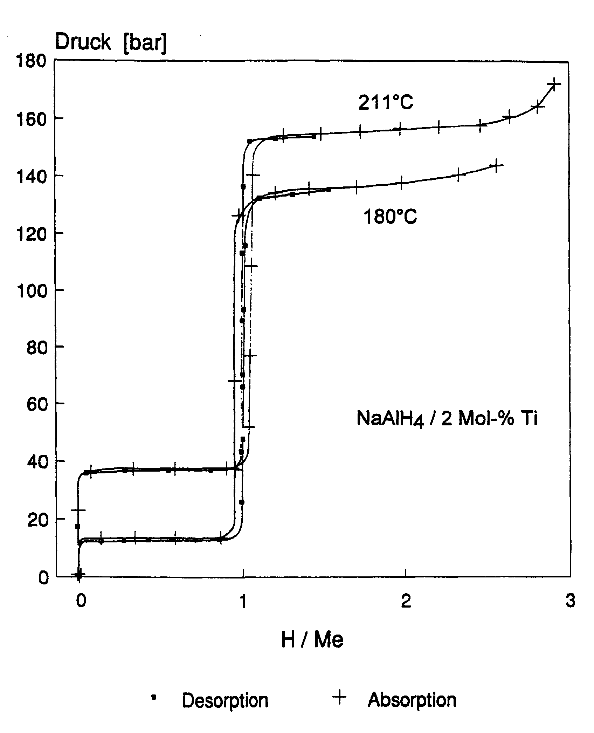

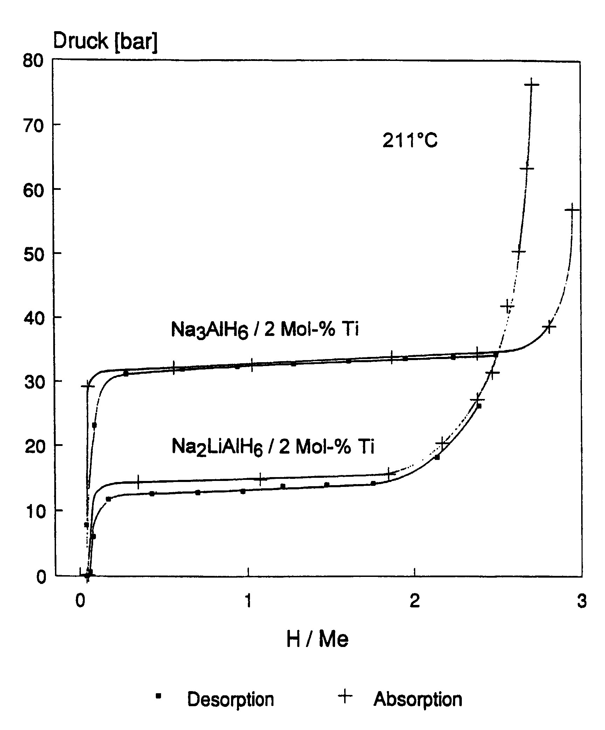

Zur Beurteilung der reversiblen Metallhydrid-Metallsysteme hinsichtlich ihrer maximal erreichbaren H₂-Speicherkapazität, sowie der Bedingungen unter denen die Wasserstoff-Be- und Entladung aus prinzipiellen (thermodynamischen) Gründen möglich ist, dienen im allgemeinen die sog. Konzentrations-Druck-Isothermen (KDI-Diagramme). Die experimentell ermittelten KDI-Diagramme des mit 2 mol-% Ti dotierten NaAlH₄/NaH + Al-Systems (Beispiel 4) bei 180 und 211 °C sind in Abb. 6 und die der Ti-dotierten Na₃AlH₆/3NaH + Al und Na₂LiAlH₆/2NaH + LiH + Al-Systeme (Beispiele 1 und 3) bei 211 °C in Abb. 7 dargestellt. Wie die Abbildungen zeigen, konnten die KDI-Diagramme der erfindungsgemäßen Hydridsysteme sowohl in Richtung der H₂-Desorption als auch der H₂-Absorption ermittelt werden, was ihre Eignung zum Zwecke der reversiblen H₂-Speicherung belegt und die in der zitierten Literatur (Text auf S. 3) angenommene Irreversibilität der thermischen Zersetzung von NaAlH₄ bzw. Na₃AlH₆ widerlegt.

Im KDI-Diagramm des NaAlH₄/NaH + Al-Systems (Abb. 6) erkennt man zwei temperaturabhängige Druckplateaus, die der zweistufigen Dissoziation von NaAlH₄ (Gl. 4 und 5) entsprechen. Das KDI-Diagramm des Na₃AlH₆/3NaH + Al-Systems (Abb. 7) zeigt dagegen nur ein Druckplateau, in Übereinstimmung mit der einstufigen reversiblen Dissoziation des Na₃AlH₆ (Gl. 7). Aus der Breite der Druckplateaus geht hervor, daß das Ti-dotierte NaAlH₄/-NaH + Al-System (Abb. 6) über die erste Dissoziationsstufe eine maximal erreichbare H₂-Speicherkapazität von 3.2 Gew.-% über die zweite von 1.7 Gew.-% und über die beiden Dissoziationsstufen von 4.9 Gew.-% H₂ verfügt. Bei den durchgeführten Zyklentests (Abb. 4 , Beispiel 3) werden über die beiden Dissoziationsstufen je nach Hydrierbedingung Speicherkapazitäten bis 4.1 Gew.-% H₂ erreicht. Das Ti-dotierte Na₃AlH₆/3NaH + Al-System (Abb. 7) verfügt über eine maximale Speicherkapazität von 2.7 Gew.-% H₂, in Zyklentests (Abb. 3, Beispiel 1) werden bis zu 2.3 Gew.-% H₂ erreicht. Das reversible NaAlH₄/NaH + Al-System zeichnet sich demnach gegenüber dem Na₃AlH₆/3NaH + Al-System durch eine wesentlich höhere reversible H₂-Speicherkapazität aus. Demgegenüber steht der Nachteil, daß das System, wegen des hohen H₂-Gleichgewichtsdruckes (Abb. 6), für die Beladung mit Wasserstoff (bei z. B. 170 °C) relativ hohen Wasserstoffdrucken (z. B. 130-150 bar) bedarf (Beispiel 4, Abb. 4). Für das Na₃AlH₆/3NaH + Al-System ist dagegen charakteristisch, daß, wegen des relativ niedrigen H₂-Gleichgewichtsdruckes (Abb. 7; 32-34 bar bei 211 °C), die Wasserstoffbeladung unter erheblich niedrigeren Wasserstoffdrucken (z. B. 40-60 bar bei 200 °C; Beispiel 1, Abb. 3) erfolgen kann.

Die Bedingungen für die Wasserstoffbe- und -entladung der erfindungsgemäßen Alkalimetallalanat-Systeme (z. B. Gl. 9 und 10) bei einer bestimmten Temperatur richten sich nach den thermodynamisch bedingten und experimentell bestimmbaren Wasserstoff-Gleichgewichtsdrucken (Abb. 6 und 7). Überschreitet der äußere H₂-Druck den Wasserstoff-Gleichgewichtsdruck, so kommt es bei unbeladenem oder partiell beladenem Zustand des Systems zur H₂-Absorption. Im umgekehrten Falle, d. h., wenn der äußere H₂-Druck geringer als der Wasserstoff-Gleichgewichtsdruck ist, erfolgt bei beladenem oder partiell beladenem Zustand des Systems die H₂-Desorption. Damit die Geschwindigkeit der H₂-Absorption oder -Desorption einen endlichen Wert annehmen kann, darf die Temperatur bei der die H₂- Be- oder -Entladung stattfindet nicht ∼100 °C unterschreiten. Zur Wasserstoffbeladung bei einer vorgegebenen Temperatur sind äußere H₂-Drucke von 0.1 bis 100 bar oberhalb des Wasserstoff-Gleichgewichtsdruckes, bevorzugt jedoch von 2-3 bis 50 bar oberhalb des Wasserstoff-Gleichgewichtsdruckes zu benutzen. Zur Wasserstoffentladung sind äußere H₂-Drucke von 0.1 bar unterhalb des Wasserstoff-Gleichgewichtsdruckes bis 0.1 bar, bevorzugt jedoch von 2-3 bar unterhalb des Wasserstoff-Gleichgewichtsdruckes bis ∼1 bar anzuwenden.

Von besonderem Interesse ist das KDI-Diagramm des Ti-dotierten Na₂LiAlH₆/2NaH + LiH + Al-System (Abb. 7, Beispiel 3), das bei 211 °C ebenfalls *nur ein* gut ausgeprägtes Druckplateau aufweist das im Vergleich zu dem des Na₃AlH₆/3NaH + Al-Systems um ca. 20 bar zu geringerem Druck verschoben ist. Das Vorliegen von nur einem von Na₃AlH₆ verschiedenem Druckplateau in, KDI-Diagramm von Na₂LiAlH₆ belegt eindeutig, daß es sich hierbei um ein bisher unbekanntes, reversibles Metallhydrid-System mit einer maximalen H₂-Speicherkapazität von 2.9 Gew.-% (praktisch erreichbar bis zu 2.7 Gew.-% H₂) und nicht etwa um ein Gemisch von Na₃AlH₆ und Li₃AlH₆ handelt. Außerdem erkennt man anhand dieses Diagramms, daß durch partielle Substitution des Natriums in Na₃AlH₆ durch Lithium eine gezielte, "maßgeschneiderte" Änderung des reversiblen H₂-Dissoziationsdruckes. d. h. der thermodynamischen Eigenschaften des vorliegenden Hydridsystems möglich ist. Solche gezielten Änderungen der thermodynamischen Parameter durch partiellen Austausch einer Metallkomponente waren bisher insbesondere bei dem reversiblen Metallhydrid-System LaNi₅H₆/LaNi₅ möglich. Sie sind u.a. dadurch von technischer Bedeutung, daß die Kombination von zwei oder mehreren solcher Metallhydride mit verschiedenen H₂-Dissoziationsdrucken die Basis für das Funktionieren von Metallhydrid-Wärmepumpen (Sandrock **92**, S. 234-237) darstellen.

Die KDI-Diagramme aller drei der untersuchten Systeme (Abb. 6 und 7) lassen außerdem zwei weitere, im Hinblick auf technische Anwendungen wichtige Merkmale dieser Systeme erkennen, nämlich die Abwesenheit der Hystereseeffekte (die H₂-Absorptionskurven stimmen mit denen der H₂-Desorption überein) und der nahezu horizontale Verlauf der H₂-Druckplateaus. Die Abwesenheit der Hystereseffekte bedeutet, daß bei Wasserstoffbe- und -entladung dieser Systeme keine imanenten Druck- und damit Energieverluste auftreten. Der horizontale Verlauf der H₂-Druckplateaus hat zur Folge, daß bei einer konstanten Temperatur im Hydridbett, die Wasserstoffbe- und -entladung mit einem konstanten Wasserstoffdruck im Gasraum ablaufen können.

Die Abhängigkeit des H₂-Dissoziationsdrucks von der Temperatur der Ti-dotierten NaAlH₄- und (Gl. 4) Na₃AlH₆-Systeme (Gl. 7) wurde anhand der KDI-Diagramme bei 180 und 211 °C experimentell ermittelt (Beispiele 1 und 4). Aufgrund der H₂-Dissoziationsdrucke ist die erste Dissoziationsstufe des Ti-dotierten NaAlH₄-Systems zu den sog. Tieftemperatur-Hydridsystemen und die zweite zu den Mitteltemperatur-Hydridsystemen (Buchner, **1982**, S. 26-29) zuzurechnen. Das zweistufige reversible Ti-dotierte Metallhydrid-System NaAlH₄/NaH + Al (Gl. 6) besteht demnach aus einer Tieftemperatur- und einer Mitteltemperatur-Hydridstufe. Mit der vorliegenden Erfindung liegen erstmals reversible Tief- bzw.

Mitteltemperatur-Hydridsysteme auf Basis dar Leichtmetalle Na, Li und Al vor. Ihre reversiblen H₂-Kapazitäten sind theoretisch und praktisch höher als die der bisher bekannten Tief- und Mitteltemperaturhydride (vgl. S. 2).

Die erfindungsgemäßen reversiblen Alkalimetallalanate sind als Wasserstoffspeichersysteme für mobile oder stationäre Zwecke geeignet. Ihre technischen Vorteile im Vergleich zu Hochtemperaturhydriden, wie z. B. MgH₂, liegen in der erheblich reduzierten Betriebstemperaturen (z. B. 150 statt ≥ 300 °C) und im Vergleich zu Tieftemperaturhydriden in den höheren H₂-Speicherkapazitäten und in den geschätzten niedrigeren Materialkosten. Wegen der realtiv geringen Reaktionsenthalpie der Alkalimetallalanate (s. oben) und ihren niedrigen Betriebstemperaturen ist bei ihrem Einsatz als H₂-Speicher für z. B. Brennstoffzellen oder Verbrennungsmotoren davon - auszugehen, daß der Wasserstoffverbraucher genügend Abwärme auf einem für die Desorption des Wasserstoffs aus dem Alanat notwendigen Temperaturniveau liefern kann. So, z. B., liegt die Betriebstemperatur der Phosphorsäure-Brennstoffzelle, 160 °C, in diesem Temperaturbereich (vgl. J. Bentley et al. *Proc. Intersoc. Energy Convers. Eng. Conf.* **1994**, 29th, 1103). Von Vorteil für den Antrieb von Brennstoffzellen ist außerdem die hohe Reinheit des aus dem Alanat desorbierten Wasserstoffs, wie insbesondere die Abwesenheit von Kohlenoxid.

Zur Erhöhung der Gesamtenergiedichte können Alkalimetallalanate als H₂-Speicher auf verschiedene Weise mit Magnesiumhydridspeichern kombiniert werden. Außerdem können sie gegebenenfalls als H₂-Zwischenspeicher bei der Hochtemperaturwärmeipeicherung auf MgH₂/Mg-Basis dienen (vgl. A. Ritter. *VGB Kraftwerkstechnik* (engl. Ed.) **1992**, *72*, 311).

Die Erfindung wird durch die folgenden Beispiele naher erläutert, ohne jedoch auf sie beschränkt zu sein. Sämtliche Versuche mit luftempfindlichen Stoffen wurden in einer Schutzatmosphäre, z. B. Argon, durchgeführt. Es wurden luft- und wasserfreie Lösungsmittel verwendet.

### Beispiel 1 (Na₃AlH₆ und mit β-TiCl₃ dotiertes Na₃AlH₆ als reversible H₂-Speicher)

Na₃AlH₆ wurde nach der Methode von Zakharkin et al. (*Dokl. Akad. Nauk SSSR*, engl. ed. **1962**, *145*, 656) aus NaAlH₄ und NaH in Heptan dargestellt. Hierzu wurde käufliches NaAlH₄ durch Lösen in THF und Ausfällung mit Ether (Clasen, *Angew, Chem.* **1961**, *73*, 322) gereinigt. Nach dem Trocknen im Vakuum zeigte das erhaltene kristalline NaAlH₄ im IR-Spektrum (KBr) sehr breite Hydridbanden im Bereich um 720, 900 und 1670 cm⁻¹; Banden von komplexiertem THF oder Ether sind im Spektrum nicht vorhanden. Elementaranalyse (berechnete Werte für NaAlH₄): Na 42.71 (42.75), Al 49.46 (49.96), H 7.62 (7.47), C 0.28 (0.0) %. Die Alkoholyse von NaAlH₄ lieferte 99.3 % der berechneten Menge Wasserstoff.

16.57 g (0.31 mol) des gereinigten NaAlH₄ und 14.87 g (0.62 mol) NaH (Fluka) wurden in 120 ml n-Heptan suspendiert und die Suspension in einem Autoklaven bei einem H₂-Druck von 140 bar und 162 °C (Innentemperatur) während 72 h intensiv gerührt, Na₃AlH₆ wurde durch Filtration vom Lösungsmittel abgetrennt, mit Pentan gewaschen und im Vakuum getrocknet. Erhalten wurden 30.90 g eines hellgrauen feinen Pulvers, Na₃AlH₆ wurde durch Röntgenpulveranalyse und IR-Spektrum (KBr: sehr breite Banden bei 500-1000 und um 1300 cm⁻¹; die Bande bei ∼ 1700 cm⁻¹, s. oben, fehlt) identifiziert Elementaranalyse von Na₃AlH₆ (berechnete Werte): Na 67.27 (67.62), Al 26.15 (26.45). H 5.84 (5.93), C 0.88 (0.0) %. Thermovolumetrische Analyse einer ∼ 1 g Probe (4 °C/min bis 270 °C; *Chem. Ing. Tech.* **1983**, *55*. 156) ergab 96 % der für die Dissoziation zu 3NaH + Al (Gl. 7) berechneten Menge Wasserstoff.

Zur Dotierung mit Titan wurden 15.99 g (157 mmol) Na₃AlH₆ mit 0.48 g (3.1 mol) β-TiCl₃ vermischt und mit 30 ml Ether versetzt. Die gerührte Suspension nahm sofort eine tiefbraune Farbe an und es begann die H₂-Entwicklung. Bis zur Beendigung der H₂-Entwicklung (40 min) setzte die gerührte Suspension 110 ml (4.6 mmol) H₂ frei. Der Ether wurde im Vakuum eingedampft und der Rückstand im Vakuum getrocknet. Erhalten wurden 16.46 g des Ti-dotierten Na₃AlH₆ als braunes, luftempfindliches Pulver, das im IR-Spektrum mit Na₃AlH₆ (s. oben) übereinstimmte. Elementaranalyse (berechnete Werte): Na 65.92 (65.63), Al 24.75 (25.68), H 5.28 (5.76) Ti 1.28 (0.91), Cl 1.86 (2.02), C 0.74 (0.0) %. Thermovolumetrische Analysen (s. oben) bis 270 bzw. 500 °C ergaben 97 bzw. 98 % der für die Dissoziation zu 3NaH + Al bzw. zu 3Na + Al berechneten Menge Wasserstoff. Die thermovolumetrische Kurve des Ti-dotierten Na₃AlH₆, zu 3NaH + Al ist um ca. 50 °C zu niedrigeren Temperaturen verschoben im Vergleich zu der des reinen Na₃AlH₆.

Um die Eignung als reversible H₂-Speicher zu testen, wurden jeweils 2.6 g Proben von reinem und von Ti-dotiertem Na₃AlH₆ unter gleichen Bedingungen einer Serie von Dehydrier-Rehydrierzyklen (Zyklentests) unterworfen. Die Zyklentests in diesem Beispiel wurden in sog. offenen System durchgeführt, d. h., daß bei jeder Hydrierung frischer Wasserstoff (technischer Wasserstoff 99.9 %) einem Wasserstoffdruckbehälter entnommen wurde und bei jeder Dehydrierung Wasserstoff gegen Normaldruck desorbiert wurde.

Dehydrierung: Die Probe wird mit 4 °C/min von Raumtemperatur auf 270 °C aufgeheizt und danach die Temperatur bis zum Ende der H₂-Entwicklung konstant gehalten: der zeitliche Verlauf der H₂-Entwicklung zusammen mit der Innentemperatur der Probe kann mit Hilfe einer automatischen Gasbürette (*Chem. Ing. Tech.* **1983**) aufgezeichnet werden. Die Hydrierung wird während 5½ h bei 200 °C bei einem ahnehmenden H₂-Druck im Autoklaven von 60 auf ∼ 40 bar durchgeführt.

Die Abhängigkeit der Wasserstoffspeicherkapazität (gemessen anhand der bei der Dehydrierung abgegebenen Menge Wasserstoffs) von der Zyklenzahl des reinen und des Ti-dotierten Na₃AlH₆ zeigt die Abb. 3. Unter den angegebenen Bedingungen liegt der reversible H₂-Gehalt des Ti-dotierten Na₃AlH₆/3NaH + Al-Systems bei 2.1-2.5 Gew.-% (theoretischer H₂-Gehalt 2.84 Gew.-%) und ist deutlich höher als der des undotierten Na₃AlH₆. Außerdem zeigt das Ti-dotierte Na₃AlH₆ gegenüber dem reinen Na₃AlH₆ eine erheblich bessere Zyklusstabilität.

### Beispiel 2 (reines und mit Ti(OBu)₄ dotiertes Na₃AlH₆ als reversible H₂-Speicher, Geschwindigkeit der H₂-Desorption in Abhängigkeit von der Temperatur; 100-Zyklentest)

9.58 g (94 mmol) Na₃AlH₆ (Beispiel 1) wurden in 30 ml Ether suspendiert und die Suspension unter Rühren (mit einer Spritze durch ein Septum) mit 0.64 m; (1.9 mmol. 2 mol-%) Titan-tetra-n-butylat (Ti(OBu)₄) versetzt. Die H₂-Entwicklung (vgl. Beispiel 1) betrug 93 ml (2.1 H₂/Ti). Nach dem Eindampfen des Ethers im Vakuum verblieb 10.13 g des Ti-dotierten Na₃AlH₆.

Zur Charakterisierung als reversible H₂-Speicher, wurden von reinem und von Ti-dotiertem Na₃AlH₆ die Geschwindigkeiten der H₂-Desorption bei Temperaturen von 140, 160, 180 und 200 °C gemessen. Hierzu wurden jeweils 1.75 g der in Glasgefäßen befindlichen Proben des Alanats in den auf die jeweilige Temperatur vorgeheizten Ofen gebracht und der zeitliche Ablauf der H₂-Entwicklung mit Hilfe einer an das Glasgefäß angeschlossenen automatischen Glasbürette (*Chem. Ing. Techn*. **1983**; *s*. Abb. 1) aufgezeichnet. Wie aus Abb. 1 ersichtlich, bewirkt die Ti-Dotierung eine dramatische Verbesserung der H₂-Desorptionsfähigkeit des Na₃AlH₆.

Eine weitere (7.41 g) Probe des mit 2 mol.-% Ti(OBu)₄ dotierten Na₃AlH₆ (s. oben) wurde in geschlossenem System einem 100-Zyklen dauernden Dehydrier-Rehydrier-Test unterzogen. Dabei befand sich die Probe (die vorher zu Tabletten von ca. 1.0 g/ml verpresst wurde) in einem 45 ml fassenden Autoklaven, der über eine Kapillare an ein 100 ml Druckgefäß angeschlossen wurde. Zu bestimmten Zeitabständen wurde der Autoklav abwechselnd für die Dehydrierung während 1¼ h auf 230 °C aufgeheizt und für die Rehydrierung verschieden lange bei 170 °C gehalten. Die Variation des H₂-Drucks im System im Bereich zwischen 30 und 42 bar, wurde mit Hilfe eines Druck-Spannung-Umsetzers zusammen mit der Temperatur des Autoklaven auf einem 2-Kanal-Schreiber aufgezeichnet. Anhand der Druckvariation im System konnte bei dem 100-Zyklentest für Hydrierzeiten von 1¼ bzw. 4½ h die reversible H₂-Kapazität der Probe von 1.64-1.83 bzw. 1.79-2.06 Gew.-% ermittelt werden.

### Beispiel 3 (mit β-TiCl₃ dotiertes Na₂LiAlH₆ als reversibler H₂-Speicher)

Na₂LiAlH₆ wurde durch Umsetzung von NaAlH₄ mit NaH und LiH im Molverhältnis 1:1:1 in n-Heptan dargestellt. Aus 6.79 g (126 mmol) NaAlH₄, 3.04 g (127 mmol) NaH und 0.97 g (122 mmol) LiH in 90 ml n-Heptan wurden, analog Beispiel 1, 11.08 g Na₂LiAlH₆ als hellgraues, feines Pulver erhalten. Das IR-Spektrum des Na₂LiAlH₆ stimmte mit dem des Na₃AlH₆ (Beispiel 1) überein (IR-spektroskopische Hinweise für NaH, LiH oder NaAlH₄ waren nicht vorhanden).

Elementaranalyse (berechnete Werte für Na₂LiAlH₆): Na 53.98 (53.50), Al 29.87 (31.39), Li 7.88 (8.08), H 6.50 (7.64), C 1.56 (0.0) %. Thermovolumetrische Analyse (vgl. Beispiel 1) bis 500 °C ergab 98 % der für die Dissoziation zu 2Na + LiH + Al berechneten Menge Wasserstoff.

5.87 g (68 mmol) Na₂LiAlH₆ wurden wie im Beispiel 1 beschrieben, mit 2 mol-% (1.4 mmol, 0.22 g) β-TiCl₃ in Ether dotiert. H₂-Entwicklung bei der Dotierung: 2.1 mmol. Elementaranalyse der erhaltenen 6.03 g des Ti-dotierten Na₂LiAlH₆ (berechnete Werte in Klammern): Na 51.06 (51.64), Al 30.17 30.30), Li 7.59 (7.80), H 5.96 (6.79), Ti 1.05 (1.08), Cl 2.46 (2.39), C 1.71(0.0) %. Das KDI-Diagramm des Ti-dotierten Na₂LiAlH₆ bei 211 °C ist in Abb. 7 dargestellt. Ti-dotiertes Na₂LiAlH₆ wurde unter den gleichen Bedingungen wie im Beispiel 1, einem 28-Zyklen dauernden Test unterzogen. Wie die Abb. 9 zeigt, liegt der reversible H₂-Gehalt dieses Systems zwischen 2.10 und 2.51 Gew.-%. Bei einer Hydrierdauer von 16 h kann die H₂-Kapazität von bis zu 2.7 Gew.-% erreicht werden.

### Beispiel 4 (NaAlH₄ und mit β-TiCl₃ dotiertes NaAlH₄ als reversible H₂-Speicher)

26.83 g (0.50 mol) des gereinigten NaAlH₄ (Beispiel 1) wurden wie im Beispiel 1 beschrieben mit 2 mol-% (10.2 mmol, 1.58 g) β-TiCl₃ in 150 ml Ether dotiert. Die H₂-Entwicklung bei der Dotierung von 14.6 mmol läßt auf eine Reduzierung des Titans bis zur nullwertigen Stufe schließen. Elementaranalyse der erhaltenen 28.33 g des Ti-dotierten NaAlH₄ (berechnete Werte): Na 41.80 (40.27), Al 46.81 (47.26), H 6.95 (7.06), Ti 1.46 (1.68), Cl 2.79 (3.73), C 0.20 (0.0) %. Das IR-Spektrum des Ti-dotierten NaAlH₄ stimmt mit dem des reinen NaAlH₄ (Beispiel 1) überein. Thermovolumetrische Analysen (vgl. Beispiel 1: 4 °C/min) bis 200, 270 bzw. 500 °C ergaben 104, 96 bzw. 97 % der für die Dissoziation zu 1/3 Na₃AlH₆ + 2/3 Al (nachgewiesen durch IR- und Röntgenpulveranalyse), NaH + Al (Röntgenpulveranalyse) bzw. Na + Al berechneten Menge Wasserstoff. Die thermovolumetrische Kurve des Ti-dotierten NaAlH₄ bis 200 °C ist um 85 °C zu niedrigeren Temperaturen verschoben im Vergleich zu der des reinen NaAlH₄.

Der Verlauf der Zyklentests, durchgeführt an Proben (2.4 g) des reinen und des Ti-dotierten NaAlH₄ unter verschiedenen Hydrierbedingungen (Dehydrierung durchgeführt wie im Beispiel 1) zeigt die Abb. 4. Das KDI-Diagramm des Ti-dotierten NaAlH₄ ist in Abb. 6 dargestellt.

### Beispiel 5 (mit Ti(OBu)₄ dotiertes NaAlH₄ als reversibler H₂-Speicher)

Die Dotierung von NaAlH₄ mit Ti(OBu)₄ in Ether wurde analog wie im Beispiel 2 durchgeführt. Ansatz: 10.96 g (203 mmol) des gereinigten NaAlH₄ (Beispiel 1), 25 ml Ether, 1.39 ml (Ti(OBu)₄ (2 mol-%). Wasserstoffentwicklung: 205 ml (2.1 H₂/Ti). Nach dem Trocknen im Vakuum wurden 12.40 g des Ti-dotierten NaAlH₄ erhalten. Die Bestimmung der Geschwindigkeit der H₂-Desorption an Proben (1.35 g) des Ti-dotierten und des undotierten NaAlH₄ bei verschiedenen Temperaturen wurde wie im Beispiel 2 durchgeführt. Die Meßergebnisse (Abb. 2) zeigen u. a., daß das Ti-dotierte NaAlH₄ bereits bei 160 °C innerhalb von wenigen Stunden 4.5 Gew.-% H₂ liefert.

Eine weitere Probe des gereinigten NaAlH₄ (2.42 g, 44.8 mmol) wurde wie im Beispiel 2 beschrieben mit 2 mol-% (Ti(OBu)₄ dotiert, wobei Pentan (10 ml) anstelle von Ether als Lösungsmittel verwendet wurde. Nach einstündigem Rühren des Ansatzes bei Raumtemperatur wurde eine Gasentwicklung von 42 ml festgestellt. Nach dem Abdampfen des Lösungsmittels und Trocknen des Rückstandes im Vakuum verblieben 2.61 g des Ti-dotierten NaAlH₄ in Form eines braunen Pulvers. Dieses lieferte bei der Thermolyse (bis 270 °C, vgl. Beispiel 1) 1.56 l H₂ (20 °C/1 bar) entsprechend 5.0 Gew.-% H₂. Den Verlauf der Rehydrierung des so erhaltenen Feststoffes bei 170 °C/152 bar H₂ (Anfangsdruck) im Vergleich zur Rehydrierung der entsprechend thermolysierten Proben des mit 2 mol-% β-TiCl₃ dotierten und des undotierten NaAlH₄ (Beispiel 4), zeigt die Abb. 5. Nach 15 h unter den angegbenen Bedingungen erreicht die mit Ti(OBu)₄-dotierte Probe einen Rehydriergrad von 78 % (3.9 Gew.-% H₂). Die entsprechenden Werte für die mit β-TiCl₃-dotierte bzw. undotierte Probe betragen 78 % (3.9) bzw. 15% (0.8%).

### Beispiel 6 (mit Ti(OBu)₄ dotiertes NaAlH₄ als reversibler H₂-Speicher; Dotierung ohne Lösungsmittel)

2.34 g (43.3 mmol) des gereinigten NaAlH₄ (Beispiel 1) wurden in fester Form mit einem Magnetrührkern aufgewirbelt und mit einer Spritze durch ein Septum mit 0.30 ml (0.88 mmol) Titanteurabutylat versetzt. Das anfänglich weiße Natriumalanat färbte sich hierdurch hellbraun und es kam innerhalb von 40 min zu einer Wasserstoffentwicklung von 24 ml (= 2.3 H/Ti). 2.49 g dieses Materials wurden daraufhin als reversibler Wasserstoffspeicher eingesetzt. Die Thermolyse bis 270 °C (vgl. Beispiel 1) lieferte 1.46 H₂ (20 °C/1 bar) entsprechend 4.9 Gew.-%. Der Rückstand wurde in 15 h bei 170 °C zwischen 143 und 120 bar rehydriert und einer erneuten Thermolyse - wie oben - unterzogen. Der reversible H₂-Gehalt betrug 3.6 Gew.-%, entsprechend einem Rehydriergrad von 74%.

### Beispiele 7-25

Jeweils 1.3 g des gereinigten NaAlH₄ (Beispiel 1) wurden in 20 ml Ether suspendiert und die gerührte Suspension mit 5 mol-% (bezogen auf NaAlH₄) der jeweiligen Metallverbindung versetzt. Nach 20-60 min (Beendigung der H₂-Entwicklung) wurde das Lösungsmittel abgedampft und die Rückstände im Vakuum getrocknet. Diese wurden der im Beispiel 1 beschriebenen Thermolyse bis 270 °C unterworfen und die dabei entwickelten H₂-Volumina (Tabelle 1, Spalte "1. Thermolyse") ermittelt. Die Feststoffe wurden anschließend in einem Autoklaven während 24 h bei 120 °C und 150 (Anfangsdruck) bis minimal 130 bar H₂-Druck hydriert und darauf erneut bis 270 °C thermolysiert. Das Verhältnis der H₂-Volumina der 2. zu der, der 1. Thermolyse (in %) ergeben die in Tabelle 1 angegebenen Rehydrierungsgrade.

### Beispiel 26 (mit Ti(OBu)4 und LaNi₅ dotiertes NaAlH₄ als reversible H₂-Speicher)

Eine Probe des gereinigten (vgl. Beispiel 1) NaAlH₄ (1.87 g, 34.6 mmol) wurde in fester Form mit 380 mg (17 Gew.-%) LaNi₅-Pulver (Alfa. 99.5%) verrührt und darauf wie im Beispiel 2 beschrieben mit 2 mol % Ti(OBu)₄ in 20 ml Ether dotiert. Wasserstoffentwicklung: 43.6 ml (2.1 H₂/Ti). Nach dem Abdampfen des Ethers und Trocknen im Vakuum, wurden 2.48 g des mit LaNi₅ *und* Ti(OBu)₄ dotierten NaAlH₄ erhalten. Die Thermolyse bis 270 °C (wie in Beispiel 1) lieferte 4.1 Gew.-% H₂. Nach der Hydrierung der dehydrierten Probe (120 °C/110-90 bar H₂/24 h) wurde bei der erneuten Thermolyse bis 270 °C ein H₂-Gehalt von 3.1 Gew.-% festgestellt, entsprechend einem Rehydriergrad von 76 %. Im Vergleich dazu zeigte eine nur mit Ti(OBu)₄ dotierte Probe von NaAlH₄ (Beispiel 5) unter den gleichen Bedingungen einen Rehydriergrad von nur 60 %.

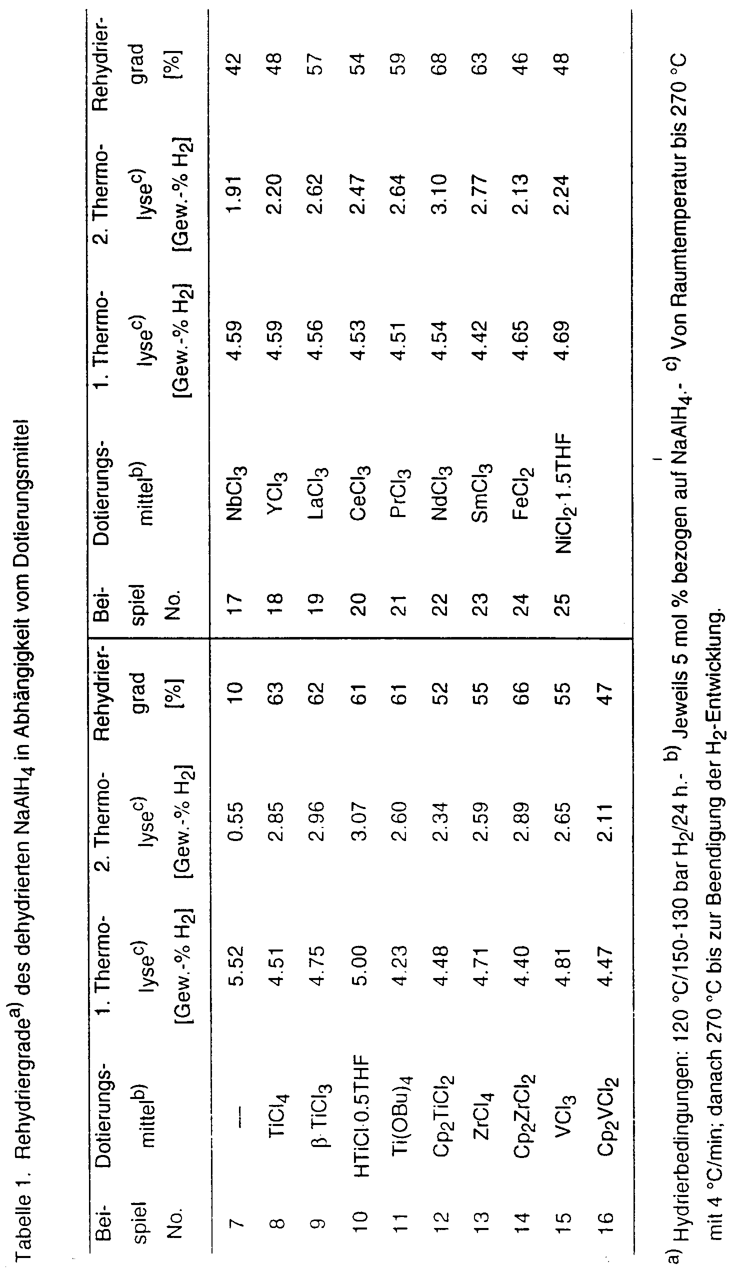

## Patentansprüche

1. Verfahren zur reversiblen Speicherung von Wasserstoff, dadurch gekennzeichnet, daß als reversible Wasserstoff-Speichermaterialien die komplexen Alkalimetall-Aluminiumhydride (Alkalimetallalanate) der allgemeinen Formel 1 verwendet werden.

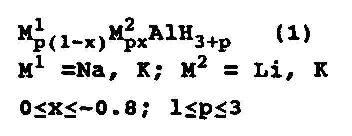

2. Verfahren nach Anspruch 1, dadurch gekennzeichnet, daß zur Verbesserung ihrer Wasserstoff-Speichereigenschaften die reversiblen Wasserstoff-Ent- und -Beladungsreaktionen (Wasserstoff-Desorption bzw. -Absorption) der Alkalimetallalanate 1 katalysiert werden.

3. Verfahren nach Anspruch 1 und 2, dadurch gekennzeichnet, daß zur Katalyse der Wasserstoff-Desorption bzw. -Absorp tion, die Alkalimetallalanate 1, durch Umsetzung bzw. durch mechanisches Verrühren mit Verbindungen der Übergangsmetalle der dritten bis fünften Gruppe des Periodensystems sowie Verbindungen des Eisens, des Nickels und der Seltenerdmetalle oder ihren Kombinationen dotiert werden.

4. Verfahren nach Anspruch 1-3, dadurch gekennzeichnet, daß zur Dotierung bevorzugt Alkoholate, Halogenide, Hydride sowie metallorganische und intermetallische Verbindungen der genannten Metalle oder ihre Kombinationen verwendet werden.

5. Verfahren nach Anspruch 1-4, dadurch gekennzeichnet, daß die Dotierung in einem organischen Lösungsmittel durchgeführt wird.

6. Verfahren nach Anspruch 1-4, dadurch gekennzeichnet, daß die Dotierung in Abwesenheit von Lösungsmitteln durchgeführt wird.

7. Verfahren nach Anspruch 1-6, dadurch gekennzeichnet, daß die Dotierungsmittel in Mengen von 0.2 bis 10 mol% bezogen auf Alkalimetallalanate, bevorzugt in Mengen von 1 bis 5 mol-% bezogen auf **1**, eingesetzt werden.

8. Verfahren nach Anspruch 1-7, dadurch gekennzeichnet, daß die Wasserstoffbe- bzw. -entladung bei Temperaturen von >100 bis 300 °C stattfindet.

9. Verfahren nach Anspruch 1-8, dadurch gekennzeichnet, daß die Wasserstoffbeladung bei H₂-Drücken von 0.1 bis 100 bar oberhalb des Wasserstoff-Gleichgewichtsdruckes bei der vorgegebenen Temperatur, bevorzugt bei 2 bis 50 bar oberhalb des Wasserstoff-Gleichgewichtsdruckes, durchgeführt wird.

10. Verfahren nach Anspruch 1-8, dadurch gekennzeichnet, daß die Wasserstoffentladung bei H₂-Drücken von 0.1 bar unterhalb des Wasserstoff-Gleichgewichtsdruckes bis 0.1 bar, bevorzugt bei 2 bis 3 bar unterhalb des Wasserstoff-Gleichge wichtsdruckes bis 1 bar, durchgeführt wird.

11. Na₂LiAlH₆.

12. Na₂LiAlH₆ dotiert mit Verbindungen der Übergangsmetalle der 3. bis 5. Gruppe des Periodensystems sowie Verbindungen des Eisens, des Nickels und der Seltenerdmetalle oder ihre Kombinationen.

13. Verwendung von Na₂LiAlH₆ oder Na₂LiAlH₆ dotiert mit Verbindungen der Übergangsmetalle der 3. bis 5. Gruppe des Periodensystems sowie Verbindungen des Eisens, des Nickels und der Seltenerdmetalle oder ihren Kombinationen als reversible Wasserstoffspeicher.

14. Verwendung von NaAlH₄ oder NaAlH₄ dotiert mit Verbindungen der Übergangsmetalle der 3. bis 5. Gruppe des Periodensystems sowie Verbindungen des Eisens, des Nickels und der Seltenerdmetalle oder ihren Kombinationen als reversible Wasserstoffspeicher.

15. Verwendung von Na₃AlH₆ oder Na₃AlH₆ dotiert mit Verbindungen der Übergangsmetalle der 3. bis 5. Gruppe des Periodensystems sowie Verbindungen des Eisens, des Nickels und der Seltenerdmetalle oder ihren Kombinationen als reversible Wasserstoffspeicher.

16. NaAlH₄ dotiert mit Verbindungen der Übergangsmetalle der 3. bis 5. Gruppe des Periodensystems sowie Verbindungen des Eisens, des Nickels und der Seltenerdmetalle oder ihren Kombinationen.

17. Na₃AlH₆ dotiert mit Verbindungen der Übergangsmetalle der 3. bis 5. Gruppe des Periodensystems sowie Verbindungen des Eisens, des Nickels und der Seltenerdmetalle oder ihren Kombinationen.

## Claims

1. A process for the reversible storage of hydrogen, characterized in that the complex alkali metal aluminium hydrides (alkali metal alanates) of general formula 1 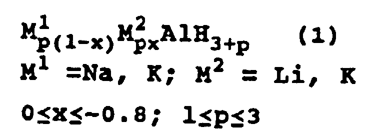 are used as the reversible hydrogen storage materials.

2. The process according to claim 1, characterized in that the reversible hydrogen charging and hydrogen decharging reactions (hydrogen desorption and hydrogen absorption) of the alkali metal alanates 1 are catalyzed for improving the hydrogen storage properties.

3. The process according to claim 1 and 2, characterized in that the alkali metal alanates 1 are doped by reacting or mechanically stirring them with compounds of the transition metals of groups three to five of the periodic table as well as compounds of iron, nickel and the rare earth metals or combinations thereof for said catalysis of hydrogen desorption and hydrogen absorption.

4. The process according to claims 1 to 3, characterized in that alcoholates, halides, hydrides and organometallic and intermetallic compounds of the mentioned metals or combinations thereof are preferably used for doping.

5. The process according to claims 1 to 4, characterized in that the doping is performed in an organic solvent.

6. The process according to claims 1 to 4, characterized in that the doping is performed in absence of a solvent.

7. The process according to claims 1 to 6, characterized in that the dopants are employed in amounts of from 0.2 to 10 mole %, based on the alkali metal alanates, preferably in amounts of from 1 to 5 mole %, based on 1.

8. The process according to claims 1 to 7, characterized in that the hydrogen charging and hydrogen decharging is performed at temperatures of from > 100 to 300°C.

9. The process according to claims 1 to 8, characterized in that the hydrogen charging is performed at H₂ pressures of from 0.1 to 100 bar above the hydrogen equilibrium pressure at the temperature given, preferably from 2 to 50 bar above the hydrogen equilibrium pressure.

10. The process according to claims 1 to 8, characterized in that the hydrogen decharging is performed at H₂ pressures of from 0.1 bar below the hydrogen equilibrium pressure to 0.1 bar, preferably from 2 to 3 bar below the hydrogen equilibrium pressure to 1 bar.

11. Na₂LiAlH₆.

12. Na₂LiAlH₆ doped with compounds of the transition metals of groups three to five of the periodic table as well as compounds of iron, nickel and the rare earth metals or combinations thereof.

13. Use of Na₂LiAlH₆ or Na₂LiAlH₆ doped with compounds of the transition metals of groups three to five of the periodic table as well as compounds of iron, nickel and the rare earth metals or combinations thereof as reversible hydrogen storage materials.

14. Use of NaAlH₄ or NaAlH₄ doped with compounds of the transition metals of groups three to five of the periodic table as well as compounds of iron, nickel and the rare earth metals or combinations thereof as reversible hydrogen storage materials.

15. Use of Na₃AlH₆ or Na₃AlH₆ doped with compounds of the transition metals of groups three to five of the periodic table as well as compounds of iron, nickel and the rare earth metals or combinations thereof as reversible hydrogen storage materials.

16. NaAlH₄ doped with compounds of the transition metals of groups three to five of the periodic table as well as compounds of iron, nickel and the rare earth metals or combinations thereof.

17. Na₃AlH₆ doped with compounds of the transition metals of groups three to five of the periodic table as well as compounds of iron, nickel and the rare earth metals or combinations thereof.

## Revendications

1. Procédé de stockage réversible d'hydrogène, caractérisé en ce qu'on utilise comme matériaux de stockage d'hydrogène réversibles les hydrures complexes de métaux alcalins-aluminium (alanates de métaux alcalins) de formule générale 1.

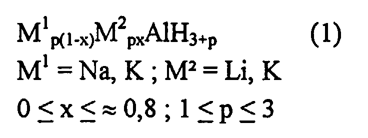

2. Procédé selon la revendication 1, caractérisé en ce que, pour améliorer leurs propriétés de stockage de l'hydrogène, on catalyse les réactions réversibles de décharge et de charge d'hydrogène (désorption ou, selon les cas, absorption d'hydrogène) des alanates de métaux alcalins 1.

3. Procédé selon les revendications 1 et 2, caractérisé en ce que, pour la catalyse de la désorption ou, selon les cas, de l'absorption d'hydrogène, on dope les alanates de métaux alcalins 1 par réaction ou, selon les cas, par mélange mécanique avec des composés des métaux de transition des troisième à cinquième groupes de la classification périodique des éléments, ainsi que des composés du fer, du nickel et des métaux terreux rares ou de leurs combinaisons.

4. Procédé selon les revendications 1 à 3, caractérisé en ce que, pour le dopage, on utilise de préférence des alcoolates, des halogénures, des hydrures ainsi que des composés organométalliques et intermétalliques des métaux mentionnés ou leurs combinaisons.

5. Procédé selon les revendications 1 à 4, caractérisé en ce que le dopage est réalisé dans un solvant organique.

6. Procédé selon les revendications 1 à 4, caractérisé en ce que le dopage est réalisé en l'absence de solvants.

7. Procédé selon les revendications 1 à 6, caractérisé en ce que les agents de dopage sont utilisés dans des quantités de 0,2 à 10 % molaire par rapport aux alanates de métaux alcalins, de préférence dans des quantités de 1 à 5 % molaire par rapport à 1.

8. Procédé selon les revendications 1 à 7, caractérisé en ce que la charge ou, selon les cas, la décharge d'hydrogène se fait à des températures allant de plus de 100 à 300°C.

9. Procédé selon les revendications 1 à 8, caractérisé en ce que la charge en hydrogène se fait à des pressions d'hydrogène allant de 0,1 à 100 bars au-dessus de la pression d'équilibre d'hydrogène à la température fixée à l'avance, de préférence entre 2 et 50 bars au-dessus de la pression d'équilibre de l'hydrogène.

10. Procédé selon les revendications 1 à 8, caractérisé en ce que la décharge d'hydrogène se fait à des pressions d'hydrogène situées à 0,1 bar en-dessous de la pression d'équilibre d'hydrogène jusqu'à 0,1 bar, de préférence à 2 à 3 bars en-dessous de la pression d'équilibre d'hydrogène jusqu'à 1 bar.

11. Na₂LiAlH₆.

12. Na₂LiAlH₆ dopé avec des composés des métaux de transition des troisième à cinquième groupes du système de la classification périodique des éléments, ainsi que des composés du fer, du nickel et des métaux terreux rares ou leurs combinaisons.

13. Utilisation de Na₂LiAlH₆ ou de Na₂LiAlH₆ dopé avec des composés des métaux de transition des troisième à cinquième groupes de la classification périodique des éléments, ainsi que des composés du fer, du nickel et des métaux terreux rares ou de leurs combinaisons comme accumulateurs d'hydrogène réversibles.

14. Utilisation de NaAlH₄ ou de NaAlH₄ dopé avec des composés des métaux de transition des troisième à cinquième groupes de la classification périodique des éléments, ainsi que des composés du fer, du nickel et des métaux terreux rares ou de leurs combinaisons comme accumulateurs d'hydrogène réversibles.

15. Utilisation de Na₃AlH₆ ou de Na₃AlH₆ dopé avec des composés des métaux de transition des troisième à cinquième groupes de la classification périodique des éléments, ainsi que des composés du fer, du nickel et des métaux terreux rares ou de leurs combinaisons comme accumulateurs d'hydrogène réversibles.

16. NaAlH₄ dopé avec des composés des métaux de transition des troisième à cinquième groupes de la classification périodique des éléments, ainsi que des composés du fer, du nickel et des métaux terreux rares ou de leurs combinaisons.

17. NaAlH₆ dopé avec des composés des métaux de transition des troisième à cinquième groupes de la classification périodique des éléments, ainsi que des composés du fer, du nickel et des métaux terreux rares ou de leurs combinaisons.
